# EUROPÄISCHE PATENTANMELDUNG

(11) **EP 4 733 109 A1**
(43) Veröffentlichungstag der Anmeldung: **29.04.2026**
(21) Anmeldenummer: 25207661.7
(22) Anmeldetag: 09.10.2025
(51) Int. Cl.: B60K 11/04, B62D 25/08

(54) **BEFESTIGUNGSANORDNUNG ZUR ANBINDUNG EINES KÜHLERMODULS AN EINEN FAHRWERKSRAHMEN EINES KRAFTFAHRZEUGS**

(30) Priorität: 25.10.2024 DE 102024131176
(71) Anmelder: Volkswagen Aktiengesellschaft, 38440 Wolfsburg (DE)
(72) Erfinder: Diedrich, Mathias, 38440 Wolfsburg (DE)

(57) **Zusammenfassung**

Die Erfindung betrifft eine Befestigungsanordnung (10) zur Anbindung eines Kühlermoduls (30) an einen Fahrwerksrahmen (110) eines Kraftfahrzeugs (100), aufweisend zwei Modulträger (20), jeweils mit zumindest einer Kühlermodulaufnahme (21, 25) zur Lagerung des Kühlermoduls (30) an den Modulträgern (20), mit einem ersten Befestigungsabschnitt (22) zur Befestigung der Modulträger (20) an dem Fahrwerksrahmen (110) und mit einem zweiten Befestigungsabschnitt (23) zur Befestigung der Modulträger (20) an einer Karosserie (120) des Kraftfahrzeugs (100).

## Beschreibung

Die Erfindung betrifft eine Befestigungsanordnung mit den Merkmalen des Oberbegriffs des unabhängigen Patentanspruchs 1, ein Kraftfahrzeug mit den Merkmalen des Oberbegriffs des unabhängigen Patentanspruchs 11 sowie ein Verfahren mit den Merkmalen des Oberbegriffs des unabhängigen Patentanspruchs 12.

Aufgrund des steigenden Kostendrucks wird u. a. versucht, die Produktionszeiten von Kraftfahrzeugen zu senken. Eine Möglichkeit ist es, eine modulare Bauweise anzuwenden, wobei bevorzugt große Module gebildet werden, die vorab außerhalb der Produktionslinie oder sogar außerhalb des Werkes vormontiert und dann ans Band geliefert werden können. Im eigentlichen fahrzeugbauenden Werk werden dann nur noch die großen Module miteinander verbunden.

Damit die Produktionszeiten verkürzt werden können, ist es von Vorteil, wenn die Montage der Module möglichst einfach durch einen Werker und/oder einen Roboter durchgeführt werden kann.

Insbesondere die Karosseriebauteile/-module verursachen aufgrund ihrer Komplexität lange Produktionszeiten. Bei den Karosseriebauteilen stellen besonders die Bauteile an der Fahrzeugfront eine Herausforderung in der Montage dar.

Aus dem Stand der Technik sind Befestigungsanordnungen zur Anbindung eines Kühlermoduls an Karosserieteilen bekannt. Das Dokument CN 210027598 U zeigt eine Befestigungsanordnung für ein Kühlermodul, bestehend aus einem Querträger und einem zusätzlichen Staubschutz. Aus der US 2023/0108092 A1 ist eine Befestigungsanordnung für ein Lüftermodul bekannt, wobei die Anordnung mit einem Karosseriebauteil verbunden wird und zusätzlich eine Aufnahme für einen Kühlkörper aufweist. Darüber hinaus zeigt die CN 218316245 U eine Befestigungsanordnung zur Anbindung eines Kühlermoduls an einen Karosserierahmen.

Nachteilig bei dem bekannten Stand der Technik ist jedoch die schwierige Montage, wodurch die Produktionszeiten verlängert werden. Des Weiteren ist die Ergonomie bei einer aufwändigen Montage nachteilig, insbesondere, weil die Kühlermodule in der Regel mehr als 20 kg wiegen.

Es ist daher eine Aufgabe der vorliegenden Erfindung, wenigstens einen der voranstehend beschriebenen Nachteile bei der Anbindung eines Kühlermoduls an Karosserieteilen eines Fahrzeugs zumindest teilweise zu überwinden. Insbesondere ist es Aufgabe der Erfindung, die Montage eines Kühlermoduls an Karosserieteile eines Fahrzeugs zu vereinfachen und damit zu beschleunigen. Weiter ist es eine bevorzugte Aufgabe, die Ergonomie der Montage zu verbessern.

Die voranstehende Aufgabe wird gelöst durch eine Befestigungsanordnung mit den Merkmalen des unabhängigen Patentanspruchs 1, durch ein Kraftfahrzeug mit den Merkmalen des unabhängigen Patentanspruchs 11 sowie durch ein Verfahren mit den Merkmalen des unabhängigen Patentanspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Befestigungsanordnung beschrieben sind, selbstverständlich auch im Zusammenhang mit dem erfindungsgemäßen Kraftfahrzeug und/oder im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Erfindungsgemäß vorgesehen ist eine Befestigungsanordnung zur Anbindung eines Kühlermoduls an einen Fahrwerksrahmen eines Kraftfahrzeugs, aufweisend zwei Modulträger, jeweils mit zumindest einer Kühlermodulaufnahme zur Lagerung des Kühlermoduls an den Modulträgern, mit einem ersten Befestigungsabschnitt zur Befestigung der Modulträger an dem Fahrwerksrahmen und mit einem zweiten Befestigungsabschnitt zur Befestigung der Modulträger an einer Karosserie des Kraftfahrzeugs. Mittels der Befestigungsanordnung kann das Kühlermodul an einen Fahrwerksrahmen des Kraftfahrzeugs montiert werden. Der Fahrwerksrahmen dient dabei als ein Grundstell für die Bildung eines größeren Moduls, dass im Wege der modularen Bauweise vormontiert werden kann. Für die weitere Montage am Band wird der Fahrwerksrahmen mit der Karosserie und evtl. weiteren Bauteilen des Kraftfahrzeugs verbunden. Für einen vereinfachten Zusammenbau ist es erfindungsgemäß vorgesehen, zwei Modulträger mit jeweils zumindest einer Kühlermodulaufnahme bereitzustellen. Jeder der beiden Modulträger umfasst folglich zumindest eine Kühlermodulaufnahme zur Lagerung des Kühlermoduls an dem Modulträger. Mittels der Kühlermodulaufnahme wird das Kühlermodul zumindest abschnittsweise an den Modulträger angebunden. Die Modulträger und das Kühlermodul werden somit vorzugsweise kraft- und/oder formschlüssig miteinander verbunden.

Weiterhin ist jeweils ein erster Befestigungsabschnitt an den Modulträgern vorgesehen, sodass die Modulträger mit dem Fahrwerksrahmen verbunden werden können. Mit einem zweiten Befestigungsabschnitt an jedem der beiden Modulträger kann dieser an die Karosserie des Kraftfahrzeugs montiert werden. Die Befestigungsabschnitte für den Fahrwerksrahmen und die Karosserie ermöglichen eine einfache Anbindung des Kühlermoduls an das Kraftfahrzeug. Insbesondere im Wege der modularen Bauweise kann das Kühlermodul zusammen mit dem Fahrwerksrahmen ein großes Modul für den Zusammenbau des Kraftfahrzeugs bilden. Die beiden Befestigungsabschnitte helfen dabei, das Kühlermodul vorzugsweise in einem ersten Schritt mit dem Fahrwerksrahmen zu verbinden und anschließend den Fahrwerksrahmen mit dem Kühlermodul unter Verwendung der zweiten Befestigungsabschnitte mit der Karosserie zu verbinden. Die Befestigungsanordnung bildet also eine Art Schnittstelle zwischen dem Fahrwerksrahmen mit montiertem Kühlermodul und der Karosserie des Kraftfahrzeugs.

Aufgrund des hohen Gewichts des Kühlermoduls (> 20 kg) ist es aus ergonomischen Gründen vorteilhaft, wenn dieses Modul möglichst einfach an das Fahrzeug anzubinden ist. Neben der Befestigung an der Karosserie ist auch die Anbindung an die Elektrik und/oder das Antriebsaggregat durchzuführen. Erfindungsgemäß kann mittels der Befestigungsanordnung nunmehr erst eine Anbindung des Kühlermoduls an den Fahrwerksrahmen erfolgen, wobei ein Frontend-Modul erst nachträglich montiert werden kann. Der Fahrwerksrahmen umfasst auch das Antriebsaggregat und/oder weitere Elektronik des Fahrzeugs, die nunmehr einfach verbunden werden können, ohne dass das Frontend-Modul stört. Erst im Anschluss an die Anbindung des Kühlermoduls kann das fertige montierte Modul an die Karosserie angebunden und das Frontend-Modul montiert werden.

Das Kühlermodul umfasst zumindest einen Kühlerkörper, insbesondere aus einem metallischen Werkstoff. Dabei kommen bevorzugt Aluminium, Kupfer und/oder Stahl zum Einsatz. Darüber hinaus kann es vorgesehen sein, dass zusätzlich ein Fluid zur Kühlung eingesetzt wird, das durch den Kühlkörper geleitet werden kann. Darüber hinaus ist es bevorzugt, dass zumindest ein Lüfter vorgesehen ist. Der Lüfter ist vorteilhaftweise an dem Kühlkörper anordenbar, sodass der Kühlkörper mit dem Lüfter zusammenwirken kann.

Im Rahmen der Erfindung kann bei einer Befestigungsanordnung vorgesehen sein, dass zumindest der erste Befestigungsabschnitt und/oder der zweite Befestigungsabschnitt zumindest eine Aufnahme für ein Befestigungsmittel aufweist. Unter einem Befestigungsmittel soll im Rahmen der Erfindung insbesondere eine Schraube und/oder ein Bolzen verstanden werden. Darüber hinaus sind auch andere bzw. vergleichbare Befestigungsmittel denkbar, mit denen Fahrzeugmodule miteinander verbindbar sind. Bei einer erfindungsgemäßen Aufnahme für ein Befestigungsmittel kann es sich insbesondere um eine Bohrung bzw. Ausnehmung in dem Modulträger handeln, durch die ein Befestigungsmittel eingeführt werden kann. Dadurch wird eine einfache und schnelle Montage ermöglicht. Es ist ebenfalls denkbar, dass mittels der Aufnahmen eine Einbau- und/oder Zentrierhilfe geschaffen wird. Dementsprechend ist es denkbar, dass an dem Fahrwerksrahmen ein Befestigungsmittel angeordnet ist und durch die Aufnahme führbar ist, sodass im Zuge der Montage ein Aufstecken auf das Befestigungsmittel möglich ist.

Im Rahmen der Erfindung ist bei einer Befestigungsanordnung denkbar, dass die Modulträger zumindest eine zweite Kühlermodulaufnahme aufweisen. Die zweite Kühlermodulaufnahme ist insbesondere beabstandet zu der ersten Kühlermodulaufnahme an jedem Modulträger angeordnet. Mittels der zweiten Kühlermodulaufnahme wird das Kühlermodul folglich an zwei sich voneinander unterscheidenden und beabstandeten Punkten an dem jeweiligen Modulträger montiert. Bevorzugt sind die erste und die zweite Kühlermodulaufnahme derart ausgebildet, dass das Kühlermodul nacheinander in/an den Aufnahmen angeordnet bzw. befestigt werden kann. Besonders bevorzugt ist es, wenn alle Kühlermodulaufnahmen zusammen ein Viereck aufspannen. Das bedeutet, dass, wenn man die Kühlermodulaufnahmen mittels einer Linie verbinden würde, damit ein Viereck aufgespannt wird. Die Modulträger sind insbesondere derart ausgebildet und angeordnet, dass das Kühlermodul an seinen Seiten, bevorzugt an den Breitseiten, mit den Modulträgern verbunden wird.

Es kann im Rahmen der Erfindung ferner bei einer Befestigungsanordnung vorgesehen sein, dass zumindest eine der Kühlermodulaufnahmen ein Entkopplungselement oder eine Entkopplungselementaufnahme aufweist. Im Betrieb des Kraftfahrzeugs, insbesondere des Kühlermoduls, entstehen Schwingungen, die zu einer Geräuschentwicklung führen können, die für die Nutzer des Kraftfahrzeugs als störend empfunden werden können. Beim Einsatz von einem zusätzlichen Lüfter entstehen die Schwingungen oder Vibrationen auch durch den Lüfterbetrieb. Das Entkopplungselement kann die Übertragung der Schwingungen oder Vibrationen von dem Kühlermodul an weitere Bauteile des Kraftfahrzeugs zumindest reduzieren.

Materialien wie EPDM (Ethylen-Propylen-Dien-Kautschuk) und thermoplastische Elastomere sind in der Schwingungsisolierung vorteilhaft. Diese Werkstoffe bieten eine gute Dämpfung und sind in verschiedenen Shore-Härten erhältlich, was eine Anpassung an die spezifischen Anforderungen der Anwendung ermöglicht. Hochwertige gemischtzellige PUR-Schaumstoffe sind ebenfalls sehr effektiv zur Schwingungsdämpfung. Sie bieten eine gute Leistung bei der Reduzierung von Körperschall.

Es ist ferner bei einer Befestigungsanordnung denkbar, dass der erste Befestigungsabschnitt einen ersten Arm und der zweite Befestigungsabschnitt einen zweiten Arm bildet und der erste Arm orthogonal zu dem zweiten Arm angeordnet ist, sodass eine im Wesentlichen T-förmige Geometrie gebildet ist. Ein T-förmiger Modulträger ist ein langgestrecktes Bauteil, das durch seinen charakteristischen T-förmigen Querschnitt ausgezeichnet ist. Diese Geometrie verleiht dem Träger eine hohe Formstabilität, was ihn besonders geeignet für die Aufnahme des Kühlermoduls und als Verstärkungselement macht. Der T-förmige Querschnitt besteht aus zwei Hauptkomponenten, einem Flansch, also dem horizontalen Teil des T, und einem Steg, also dem vertikalen Teil, der insbesondere ausreichend Platz für die Befestigungsaufnahmen oder Befestigungsmittel bietet.

Der horizontale Abschnitt kann darüber hinaus dazu dienen, eine Auflagefläche für das Kühlermodul bereitzustellen. Das kann insbesondere bei der Montage des Kühlermoduls hilfreich sein, um das Gewicht des Kühlkörpers aufzunehmen.

Auch kann bei einer Befestigungsanordnung vorgesehen sein, dass zumindest eine der Kühlermodulaufnahmen als Lagerdorn oder als Bohrung ausgebildet ist. Die Funktion besteht darin, das Kühlermodul präzise zu positionieren und zu fixieren, also zu halten. Dies ist insbesondere bei der Montage des schweren Kühlermoduls von Vorteil, um eine exakte Ausrichtung und einen sicheren Sitz zu gewährleisten. Der Lagerdorn besitzt einen zylindrischen Schaft, der in das Innere (eine komplementär ausgebildete Aufnahme) des Kühlermoduls eingeführt wird. Bei der Ausgestaltung als eine Bohrung ist die Funktionsweise analog dazu, jedoch dient die Bohrung entsprechend zur Aufnahme eines an dem Kühlermodul angeordneten Lagerdorns oder Stifts. Vorteilhaft ist es jedenfalls, dass das Kühlermodul an dieser Stelle sicher gehalten wird.

Im Rahmen der Erfindung kann bei einer Befestigungsanordnung vorgesehen sein, dass zumindest eine der Kühlermodulaufnahmen ein Einlaufmaul aufweist, wobei ein Fixiermittel des Kühlermoduls in dem Einlaufmaul befestigbar ist. Ein Einlaufmaul bezeichnet hier bevorzugt eine U-förmige Öffnung, die als Eingangs- oder Andockstelle für ein komplementär geformtes Gegenstück (am Kühlermodul) dient. Diese Öffnung ist vorzugsweise so gestaltet, dass das Gegenstück zumindest abschnittsweise passgenau eingeführt werden kann. Die Seitenwände des U-Profils bieten dabei Führung und Halt für das Gegenstück. Denkbar sind zusätzliche Elemente wie Führungsrillen, Kanten oder Stopper integriert, um das Gegenstück exakt zu positionieren und zu sichern. Die Befestigung erfolgt vorzugsweise durch mechanische Verriegelungen, Schraubverbindungen oder durch Klemmmechanismen, die ein festes und stabiles Verbinden der beiden Teile ermöglichen. Das Einlaufmaul und das Fixiermittel ermöglichen somit ein Befestigen des Kühlermoduls an den Modulträgern. Insbesondere kann das Kühlermodul lösbar bzw. reversibel befestigbar sein. Somit kann es zur Wartung oder für den Austausch einfach demontiert werden.

Ferner kann es im Rahmen der Erfindung bei einer Befestigungsanordnung vorgesehen sein, dass die Modulträger mittels einer Traverse miteinander verbunden sind. Eine Traverse ist im Rahmen der Erfindung ein Bauelement, das als tragendes und/oder verbindendes Element der beiden Modulträger dient. Insbesondere bezeichnet die Traverse einen horizontalen Träger, der Lasten abfängt und verteilt. Es handelt sich also um eine Querverbindung zwischen den beiden Modulträgern, wodurch die Stabilität erhöht wird und/oder Möglichkeiten zur Befestigung geschaffen werden.

In Bezug auf die vorliegende Erfindung ist bei einer Befestigungsanordnung vorstellbar, dass die Traverse einen Lagerabschnitt für das Kühlermodul aufweist, wodurch das Kühlermodul an der Traverse lagerbar ist. Eine Traverse bietet Stabilität, erhöht die Tragfähigkeit und verteilt die auftretenden Kräfte gleichmäßig. Für die Montage des Kühlermoduls ermöglicht die Traverse insbesondere eine Erleichterung für den Werker. Der kann zur Befestigung des Kühlermoduls diese auf der Traverse anordnen und damit eine erste Positionierung erhalten. Dadurch kann dann die Befestigung an den Modulträgern, beispielweise mittels Schrauben, vereinfacht werden.

Ferner kann es im Rahmen der Erfindung bei einer Befestigungsanordnung vorgesehen sein, dass die Modulträger eine Schnittstelle zur Befestigung eines Frontend-Moduls des Kraftfahrzeugs aufweisen. Ein Frontend-Modul eines Kraftfahrzeugs ist eine Baugruppe, die im vorderen Bereich des Fahrzeugs montiert wird und eine Vielzahl wichtiger Komponenten integriert. Das Modul umfasst typischerweise Teile wie den Stoßfänger, Scheinwerfer, Klimakondensator, Aufprallträger, Längsträger, Motorhaube, Kotflügel und/oder Sensoren für Assistenzsysteme (wie Radar und Kameras). Es dient zur Vereinfachung der Montageprozesse und zur Reduzierung der Produktionskosten. Das Frontend-Modul wird in einer separaten Montagestation oder bei einem Zulieferer vormontiert. Das komplett vormontierte Modul wird üblicherweise just-in-time an die Produktionslinie des Fahrzeugs geliefert. Das Modul wird an der Fahrzeugkarosserie positioniert, oft unter Zuhilfenahme von Robotern oder speziellen Hebezeugen. Dazu sind die erfindungsgemäßen Modulträger vorgesehen, die an dem Fahrwerksrahmen befestigt sind und dann mittels der Schnittstelle mit dem Frontend-Modul verbunden werden. Das Modul wird vorzugsweise mit der Fahrzeugstruktur verschraubt oder geclipst.

Die obenstehende Aufgabe wird ferner gelöst durch ein erfindungsgemäßes Kraftfahrzeug mit einem Fahrwerksrahmen und einer Karosserie sowie mit einer Befestigungsanordnung zur Anbindung eines Kühlermoduls an den Fahrwerksrahmen des Kraftfahrzeugs gemäß einem der vorhergehenden Ansprüche. Die Befestigungsanordnung ermöglicht eine einfache Anbindung an den Fahrwerksrahmen und an die Karosserie.

Damit ergeben sich in Bezug auf ein erfindungsgemäßes Kraftfahrzeug die gleichen Vorteile, wie sie bereits in Bezug auf eine erfindungsgemäße Befestigungsanordnung beschrieben worden sind.

Die obenstehende Aufgabe wird ferner gelöst durch ein erfindungsgemäßes Verfahren zur Anbindung eines Kühlermoduls an einen Fahrwerksrahmen eines Kraftfahrzeugs, aufweisend die Schritte:
- Befestigen der Modulträger an dem Fahrwerksrahmen mittels eines ersten Befestigungsabschnittes der Modulträger,
- Fügen des Kühlermoduls in die Modulträger,
- Verbinden von Funktions-Schnittstellen des Kühlermoduls mit dem Kraftfahrzeug,
- Verbinden des Fahrwerksrahmens mit einer Karosserie des Kraftfahrzeugs und
- Befestigen der Modulträger an der Karosserie des Kraftfahrzeugs.

Die Verfahrensschritte sind dabei nicht auf die Reihenfolge gemäß der Aufzählung beschränkt. Darüber hinaus können Schritte teilweise gleichzeitig und in beliebiger Reihenfolge durchgeführt werden.

Im ersten Schritt werden die Modulträger, die als Trägersysteme für verschiedene Fahrzeugkomponenten wie das Kühlermodul dienen, zunächst am Fahrwerksrahmen befestigt. Der Fahrwerksrahmen ist ein tragendes Bauteil des Fahrzeugs, das die Verbindung zwischen Antrieb, Fahrwerk und Karosserie herstellt. Der Antrieb/das Antriebsaggregat ist dabei bevorzugt an dem Fahrwerksrahmen bereits angeordnet.

Während des Vorgangs werden die Modulträger präzise ausgerichtet und an definierten Befestigungspunkten, hier den Befestigungsabschnitten, des Fahrwerksrahmens positioniert. Sie werden in der Regel durch Schrauben, Bolzen oder spezielle Halterungen fixiert. Diese Verbindungselemente sorgen für die nötige Stabilität und Sicherheit. Es wird darauf geachtet, dass die Modulträger korrekt positioniert sind, um Passgenauigkeit für nachfolgende Module zu gewährleisten.

In einem weiteren Schritt wird das Kühlermodul, welches Komponenten wie den Kühler, Lüfter, Klimakondensator und andere zur Temperaturregelung notwendige Teile enthält, in die bereits zumindest teilweise montierten Modulträger eingefügt. Das Kühlermodul wird so ausgerichtet, dass es exakt in die Aufnahmen der Modulträger passt. Die Einfügung erfolgt häufig manuell oder durch Roboterunterstützung, um Beschädigungen zu vermeiden und eine genaue Positionierung zu gewährleisten. Halteclips, Schrauben oder spezielle Befestigungsmechanismen sichern das Modul an den Trägern, um eine feste Verbindung zu gewährleisten und Vibrationen während des Fahrbetriebs zu minimieren.

In einem weiteren Schritt werden Funktions-Schnittstellen des Kühlermoduls mit den entsprechenden Anschlüssen des Fahrzeugs verbunden. Diese Schnittstellen umfassen unter anderem die Kühlmittelschläuche, elektrische Verbindungen für Lüfter und Sensoren sowie Klimaleitungen. Die Kühlmittelschläuche werden an den Kühler angeschlossen und bspw. mit Schlauchklemmen gesichert, um eine dichte Verbindung sicherzustellen.

Elektrische Steckverbindungen werden eingesteckt und auf korrekten Sitz überprüft, um eine sichere Energieversorgung und Signalübertragung zu gewährleisten.

Klimaleitungen für die Klimakonditionierung werden mit speziellen Kupplungen oder Verschraubungen verbunden, die gegen Austritt von Kältemittel abgedichtet sind.

Im folgenden Schritt wird der gesamte Fahrwerksrahmen, inklusive der darauf montierten Module und Träger, mit der Karosserie verbunden. Dieser Prozess verbindet die untere Fahrwerkseinheit mit der Oberstruktur des Fahrzeugs. Die Karosserie wird über der Fahrwerksbaugruppe positioniert, oft mittels Hubsystemen oder Robotern.

Die Verbindung erfolgt an vorgegebenen Befestigungspunkten, hier bevorzugt durch Verschrauben der Modulträger mit der Karosserie an mehreren Punkten, um eine stabile und sichere Einheit zu formen. Die Verbindungen werden auf die korrekte Vorspannung der Schrauben überprüft, um die strukturelle Integrität des Fahrzeugs sicherzustellen.

Zum Abschluss werden die Modulträger, die zunächst am Fahrwerksrahmen befestigt wurden, nun auch an der Karosserie fixiert. Diese zusätzliche Befestigung sorgt für eine erhöhte Steifigkeit und eine bessere Lastverteilung zwischen Karosserie und Fahrwerksrahmen.

Die Modulträger werden dafür an den Befestigungspunkten der Karosserie ausgerichtet.

Schrauben oder andere Befestigungsmittel verbinden die Träger sicher mit der Karosseriestruktur. Die Verbindungen werden überprüft, um sicherzustellen, dass keine Spannungen entstehen und die Komponenten präzise sitzen, was zu einer verbesserten Gesamtqualität und Haltbarkeit führt.

Damit ergeben sich in Bezug auf ein erfindungsgemäßes Verfahren die gleichen Vorteile, wie sie bereits in Bezug auf eine erfindungsgemäße Befestigungsanordnung und/oder ein erfindungsgemäßes Kraftfahrzeug beschrieben worden sind.

Es ist erfindungsgemäß denkbar, dass das Fügen des Kühlermoduls ein Einstecken des Kühlermoduls in eine erste Kühlermodulaufnahme und ein Einführen und/oder Einclipsen des Kühlermoduls in eine zweite Kühlermodulaufnahme umfasst.

Dieser Schritt beschreibt den präzisen Einbau des Kühlermoduls in die Modulträger, wobei das Modul durch spezifische Aufnahmen und Mechanismen fixiert wird, um eine stabile und vibrationsfreie Position zu gewährleisten. Die Aufnahmen sind so gestaltet, dass sie eine einfache Montage ermöglichen, gleichzeitig aber eine hohe Stabilität und Sicherheit bieten. Die erste Kühlermodulaufnahme dient als primäre Stütze und Führung, in die das Kühlermodul eingesteckt wird. Diese Aufnahme ist bevorzugt als Bohrung oder Lagerdorn ausgeführt, die das Kühlermodul sicher aufnimmt. Der Einsteckprozess erfolgt durch ein kontrolliertes Einschieben des Moduls in die Aufnahme. Die Geometrie der Aufnahme ist so ausgelegt, dass sie das Modul ohne Spielraum sicher hält und führt. Bevorzugt sind Entkopplungselemente oder Entkopplungselementaufnahmen vorgesehen, um die Montage zu erleichtern und Vibrationen zu minimieren. Nach dem Einstecken in die erste Aufnahme wird das Kühlermodul in die zweite Aufnahme eingeführt. Diese zweite Aufnahme kann verschiedene Befestigungsarten umfassen, wie mechanische Einsteckverbindungen, Clips oder Rastmechanismen.

Das Kühlermodul wird weiter in die zweite Aufnahme geschoben, bis es in die endgültige Position gelangt. Hierbei ermöglicht der erfindungsgemäße Modulträger eine präzise Montage, um eine ordnungsgemäße Fixierung sicherzustellen. Vorzugsweise erfolgt das Fixieren durch Einclipsen, wobei spezielle Clips, Rastnasen oder Schnappverbindungen die Module sicher und vibrationsarm in der Aufnahme halten. Diese Clips bestehen häufig aus belastbaren Kunststoffen oder Metall und sind so konstruiert, dass sie sich bei korrektem Einfügen selbst arretieren. Es ist denkbar, dass zusätzliche Sicherungselemente wie Schrauben oder Klemmen verwendet werden, um das Modul weiter zu stabilisieren, insbesondere bei höher belasteten Modulen.

Dieser Schritt ermöglicht es somit, dass das Kühlermodul nicht nur korrekt und stabil montiert ist, sondern auch während des Fahrzeugbetriebs sicher funktioniert, ohne durch Vibrationen oder thermische Ausdehnung beeinträchtigt zu werden.

Vorteilhafterweise kann in einem weiteren Schritt eine Dichtungsgeometrie am Kühlermodul montiert werden. Die Montage einer Dichtungsgeometrie am Kühlermodul ist vorteilhaft, um die Funktion und Effizienz des Moduls zu gewährleisten. Diese Dichtungen dienen hauptsächlich der Abdichtung gegen Luftströme, Wasser, Staub und anderen Verunreinigungen, die die Kühlleistung beeinträchtigen könnten. Zudem helfen sie, Geräusche zu dämpfen und Vibrationen zu reduzieren. Die Dichtungen bestehen vorzugsweise aus flexiblen Materialien wie EPDM (Ethylen-Propylen-Dien-Kautschuk), Schaumstoff oder Silikon, die eine hohe Elastizität und Witterungsbeständigkeit aufweisen.

Bevorzugt sind an den Auflageflächen des Kühlermoduls Führungspunkte oder Markierungen vorhanden, die die korrekte Positionierung der Dichtung erleichtern. Bei komplexen Geometrien können auch spezielle Positionierhilfen oder Vorrichtungen zum Einsatz kommen. Die Dichtungen werden beispielsweise mit Klebebändern oder Klebstoffen am Kühlermodul fixiert. Das verwendete Klebeband kann doppelseitig kleben und verfügt über eine hohe Haftkraft sowie Temperaturbeständigkeit. Der Klebevorgang erfolgt präzise, um Faltenbildung oder Lufteinschlüsse zu vermeiden, die die Dichtwirkung beeinträchtigen könnten. Es ist denkbar, dass die Dichtungen eingeclipst und/oder eingesteckt werden. Bei bestimmten Dichtungsarten erfolgt die Befestigung durch mechanische Einclips-Vorrichtungen oder Einstecknasen. Diese Montageart ist vorteilhaft, da sie eine schnelle und werkzeuglose Montage ermöglicht und eine dauerhafte Verbindung sicherstellt. Darüber hinaus ist es denkbar, dass bei robusteren oder großen Dichtungselementen auch Schraubverbindungen zum Einsatz kommen können, um eine zusätzliche mechanische Sicherung zu gewährleisten.

Im Rahmen der Erfindung kann in einem weiteren Schritt ein Frontend-Modul des Kraftfahrzeugs an der Dichtungsgeometrie des Kühlermoduls montiert bzw. gefügt werden.

Dieser Schritt umfasst die finale Montage des Frontend-Moduls an das Kühlermodul. Das Frontend-Modul ist eine komplexe Baugruppe, die Komponenten wie Stoßfänger, Scheinwerfer, Kühlergrill, Sensoren und Halterungen umfasst. Die Verbindung des Frontend-Moduls mit der Dichtungsgeometrie des Kühlermoduls sorgt für eine effiziente Abdichtung, Stabilität und die funktionale Integration der Module. Das Frontend-Modul wird auf die vorgegebenen Aufnahmepunkte der Modulträger ausgerichtet. Dabei können Führungspunkte, Positionierhilfen oder spezielle Vorrichtungen helfen, die Module präzise zu positionieren. Das Frontend-Modul wird mechanisch am Kühlermodul bzw. an den Modulträgern befestigt. Diese Verbindung erfolgt bspw. durch Schrauben, Bolzen oder spezielle Clips, die so platziert sind, dass sie die Dichtung nicht beeinträchtigen.

Dieser Schritt ist vorteilhaft, da eine ordnungsgemäße Verbindung zwischen dem Frontend-Modul und der Dichtungsgeometrie des Kühlermoduls nicht nur die Funktionalität, sondern auch die aerodynamische Effizienz und Geräuschdämmung des Fahrzeugs sicherstellt. Die Modulträger erleichtern dabei die Montage und Positionierung des Frontend-Moduls.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
Fig. 1 schematisch eine erste mögliche Ausführungsform eines erfindungsgemäßen Modulträgers,
Fig. 2 schematische eine weitere mögliche Ausführungsform eines erfindungsgemäßen Modulträgers,
Fig. 3 schematische eine mögliche Ausführungsform einer erfindungsgemäßen Befestigungsanordnung,
Fig. 4 schematische eine weitere mögliche Ausführungsform einer erfindungsgemäßen Befestigungsanordnung,
Fig. 5 die Ausführungsform aus Fig. 4 mit einem Kühlermodul,
Fig. 6 die Ausführungsform aus Fig. 4 und Fig. 5 mit Teilen einer Karosserie,
Fig. 7 die Ausführungsform aus Fig. 4, Fig. 5 und Fig. 6 mit einem Frontend-Modul,
Fig. 8 einen eingebauten Modulträger gemäß der Ausführungsform aus Fig. 2,
Fig. 9 die Ausführungsform aus Fig. 2 und Fig. 8 mit einem Frontend-Modul und Teilen einer Karosserie und
Fig. 10 schematisch ein Kraftfahrzeug mit einem Kühlermodul und erfindungsgemäßer Befestigungsanordnung.

In den Figuren werden für die gleichen technischen Merkmale, auch von unterschiedlichen Ausführungsbeispielen, die identischen Bezugszeichen verwendet.

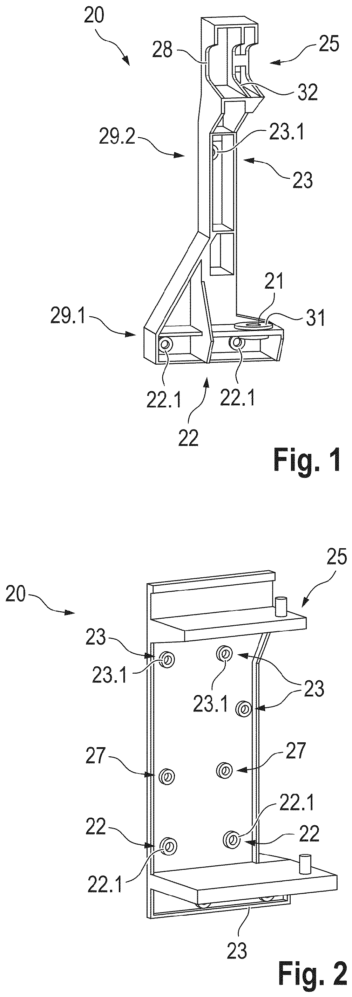

In der Fig. 1 ist eine erste mögliche Ausführungsform eines erfindungsgemäßen Modulträgers 20 gezeigt. Bei einer erfindungsgemäßen Befestigungsanordnung 10 kommen vorzugsweise zumindest zwei Modulträger 20 zum Einsatz. Der gezeigte Modulträger 20 umfasst eine erste Kühlermodulaufnahme 21 und eine zweite Kühlermodulaufnahme 25. Die erste Kühlermodulaufnahme 21 ist an einem ersten Arm 29.1 des Modulträgers 20 angeordnet und als eine Bohrung ausgebildet. Die Kühlermodulaufnahme 21 weist dabei ein Entkopplungselement 31 auf, das im gezeigten Beispiel in der Bohrung angeordnet und vorzugsweise aus Kunststoff gefertigt ist. Der erste Arm 29.1 wird durch einen sich horizontal erstreckenden Abschnitt des Modulträgers 20 gebildet. An dem ersten Arm 29.1 ist auch der erste Befestigungsabschnitt 22 angeordnet. Der erste Befestigungsabschnitt 22 weist hier und vorzugsweise zwei Aufnahmen 22.1 auf. Die Aufnahmen 22.1 dienen der Anbindung des Modulträgers an den Fahrwerksrahmen, wobei in den Aufnahmen 22.1 Befestigungsmittel anordenbar sind, die mit dem Fahrwerksrahmen bspw. verschraubt werden können.

Der Modulträger 20 weist darüber hinaus einen zweiten Arm 29.2 auf, der sich vertikal von dem ersten Arm 29.1 erstreckt. Der zweite Arm 29.1 umfasst dabei den Befestigungsabschnitt 23, mittels dem der Modulträger an eine Karosserie eines Kraftfahrzeugs anbindbar ist. Der zweite Befestigungsabschnitt 23 weist eine Aufnahme 23.1 auf, wobei in der Aufnahme 23.1 wiederum ein Befestigungsmittel anordenbar ist, das mit einer Karosserie eines Kraftfahrzeugs verbindbar ist. Der zweite Arm 29.2 weist darüber hinaus auch die
zweite Kühlermodulaufnahme 25 auf. In dem gezeigten Ausführungsbeispiel umfasst die Kühlermodulaufnahme 25 ein Einlaufmaul 28.

Ein Einlaufmaul 28 bezeichnet hier bevorzugt eine U-förmige Öffnung, die als Eingangs- oder Andockstelle für ein komplementär geformtes Gegenstück (am Kühlermodul) dient. Diese Öffnung ist vorzugsweise so gestaltet, dass das Gegenstück zumindest abschnittsweise passgenau eingeführt werden kann. Die Seitenwände des U-Profils bieten dabei Führung und Halt für das Gegenstück. Die Befestigung des Kühlermoduls erfolgt vorzugsweise durch mechanische Verriegelungen, Schraubverbindungen oder durch Klemmmechanismen, die ein festes und stabiles Verbinden der beiden Teile ermöglichen. Das Einlaufmaul 28 und das Fixiermittel ermöglichen somit ein Befestigen des Kühlermoduls an dem Modulträger 20. Insbesondere kann das Kühlermodul lösbar bzw. reversibel befestigbar sein. Somit kann es zur Wartung oder für den Austausch einfach demontiert werden.

An der Fig. 1 ist erkennbar, dass die Montage des Kühlermoduls an den Modulträger 20 auf einfache Weise erfolgen kann. Vorzugsweise wird das Kühlermodul zuerst in der ersten Kühlermodulaufnahme 21 angeordnet und dort gehalten. Das Gewicht des Kühlermoduls liegt dann bereits auf dem Modulträger 20 auf, und eine erste Positionierung mittels der Aufnahme 21 hat stattgefunden. Im Anschluss daran wird das Kühlermodul dann an der weiteren Kühlermodulaufnahme 25 fixiert. Dafür weist der Modulträger 20 ein Einlaufmaul 28 auf, in dem ein Befestigungsmittel oder Bauteil des Kühlermoduls angeordnet, insbesondere eingerastet, werden kann. Dadurch wird das Kühlermodul in seiner Montageposition zusätzlich fixiert.

In der Fig. 2 ist ein weiteres mögliches Ausführungsbeispiel eines erfindungsgemäßen Modulträgers 20 von einer Befestigungsanordnung gezeigt. Der Modulträger 20 umfasst vergleichbar zu dem Ausführungsbeispiel aus Fig.1 jeweils zwei Kühlermodulaufnahmen. In der gezeigten Perspektive befindet sich auch hier eine Kühlermodulaufnahme 25 im oberen Bereich des Modulträgers 20 und eine Kühlermodulaufnahme 21 im unteren Bereich des Modulträgers 20. Anders als im ersten Ausführungsbeispiel sind die Kühlermodulaufnahmen 21 und 25 in der Fig. 2 beide im Wesentlichen gleich bzw. identisch ausgebildet. Dabei weisen die Kühlermodulaufnahmen 21, 25 jeweils einen Lagerdorn auf, an dem das Kühlermodul anordenbar ist. Darüber hinaus umfassen die Kühlermodulaufnahmen 21, 25 jeweils einen plattformähnlichen Abschnitt zur Anordnung des Kühlermoduls. Auf den plattformähnlichen Abschnitten sind die Lagerdorne angeordnet, wobei sich die Abschnitte 21, 25 orthogonal von den Befestigungsabschnitten 22 und 23 erstrecken.

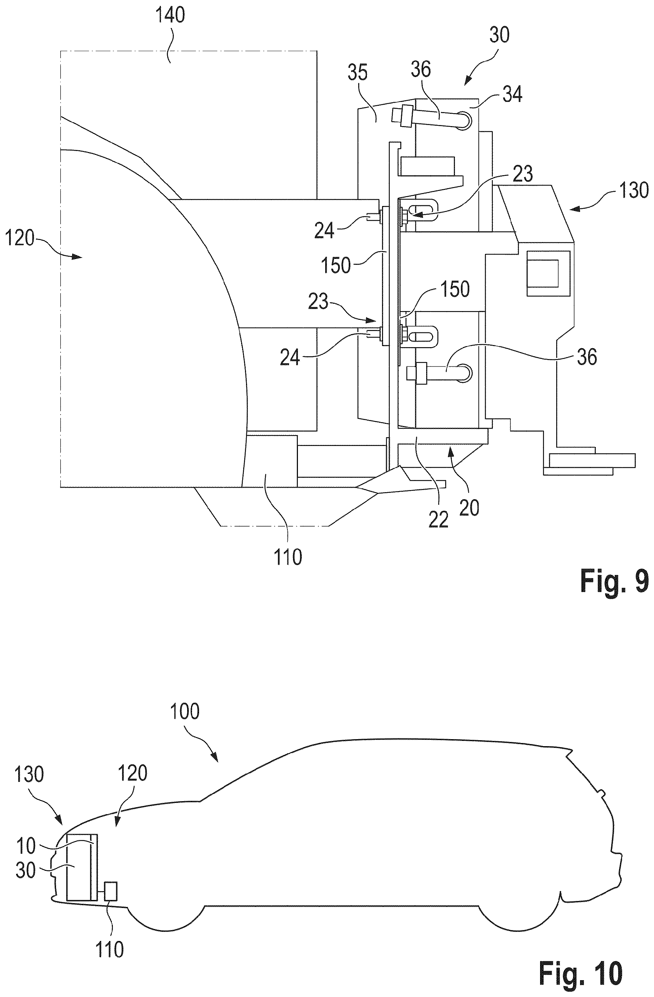

Der Modulträger 20 der Fig. 2 weist zahlreiche Aufnahmen 22.1 und 23.1 und eine Schnittstelle 27 für ein Frontend-Modul auf. Unterhalb der ersten Kühlermodulaufnahme 21 umfasst der Modulträger 20 einen Befestigungsabschnitt 23, mittels dem der Modulträger 20 an einem Fahrwerkrahmen montierbar ist. Hierfür sind Aufnahmen für Befestigungsmittel vorgesehen, sodass der Modulträger 20 mit dem Fahrwerksrahmen bspw. verschraubt werden kann. Das Ausführungsbeispiel eignet sich insbesondere dazu, zwischen zwei Schottplatten montiert zu werden, wie es in der Fig. 9 näher erläutert wird.

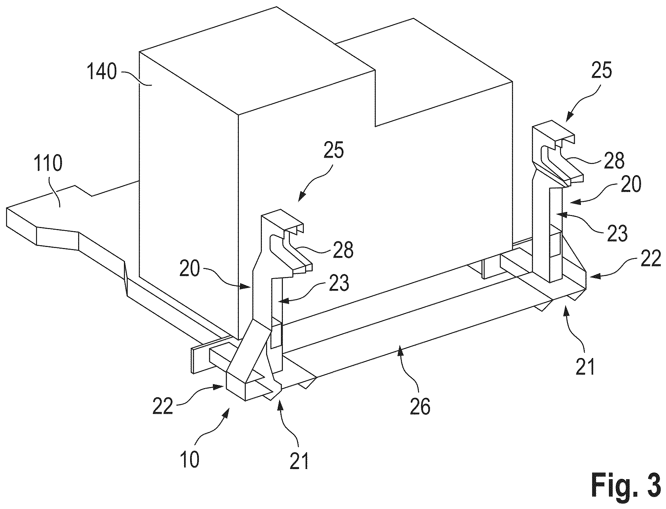

In der Fig. 3 ist eine mögliche Ausführungsform einer erfindungsgemäßen Befestigungsanordnung 10 gezeigt. Hier sind die beiden Modulträger 20 mittels einer Traverse 26 miteinander verbunden. Darüber hinaus sind die Modulträger 20 mit einem Fahrwerksrahmen 110 verbunden. Dazu dienen die Befestigungsabschnitte 22 an den Modulträgern 20. Die Modulträger 20 sind mit Ausnahme der Traverse 26 identisch zu dem Modulträger der Fig. 1 ausgebildet. Auch hier weisen die Modulträger ein Einlaufmaul 28 auf, wobei das Einlaufmaul 28 als Aufnahme bzw. Positionierhilfe für das Kühlermodul ausgebildet ist. Die Befestigungsabschnitte 23 sind im mittleren Bereich des jeweiligen Modulträgers 20 an dem längserstreckten und vertikal verlaufenden Arm des Moduls angeordnet. Mittels der Befestigungsabschnitte 23 kann der Modulträger und damit das gesamte Modul mit Fahrwerksrahmen und Antriebsaggregat 140 mit einer Karosserie eines Kraftfahrzeugs gefügt werden. Bei dem Antriebsaggregat kann es sich bspw. um einen Motor oder eine Leistungselektronik eines Kraftfahrzeugs handeln, die eine effektive Kühlung benötigen.

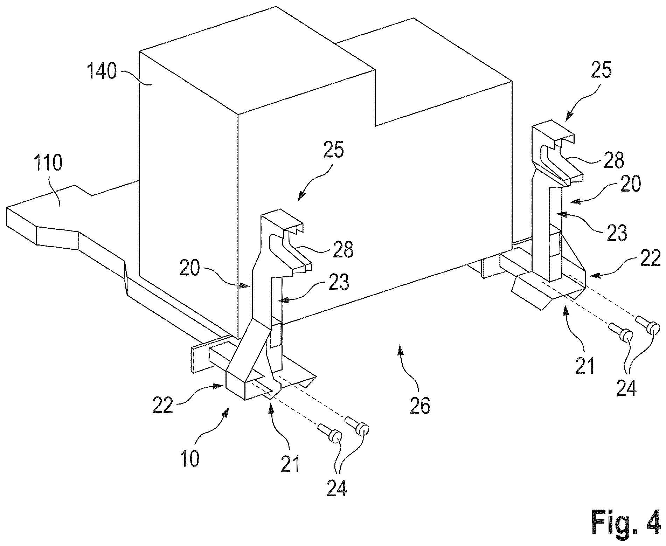

Die Fig. 4 zeigt eine weitere mögliche Ausführungsform einer erfindungsgemäßen Befestigungsanordnung 10 mit zwei Modulträgern 20, die an einem Fahrwerksrahmen 110 angeordnet sind. Die beiden Modulträger 20 werden dafür mit Hilfe der Befestigungsmittel 24 an dem ersten Befestigungsabschnitt 22 des jeweiligen Modulträgers 20 an dem Fahrwerksrahmen 110 befestigt. Hier und vorzugsweise sind die Befestigungsmittel 24 als Schrauben ausgebildet und werden durch die Aufnahmen für das Befestigungsmittel 24 an dem Modulträger 20 im Abschnitt 22 mit dem Fahrwerksrahmen 110 verschraubt. Damit ist die Befestigungsanordnung 10 gemäß dem ersten erfindungsgemäßen Verfahrensschritt an dem Fahrwerksrahmen 110 befestigt. Dabei kann es wie in der Fig. 4 gezeigt vorgesehen sein, dass das Antriebsaggregat bzw. das zu kühlende Bauteil bereits auf dem Fahrwerksrahmen 110 angeordnet sind.

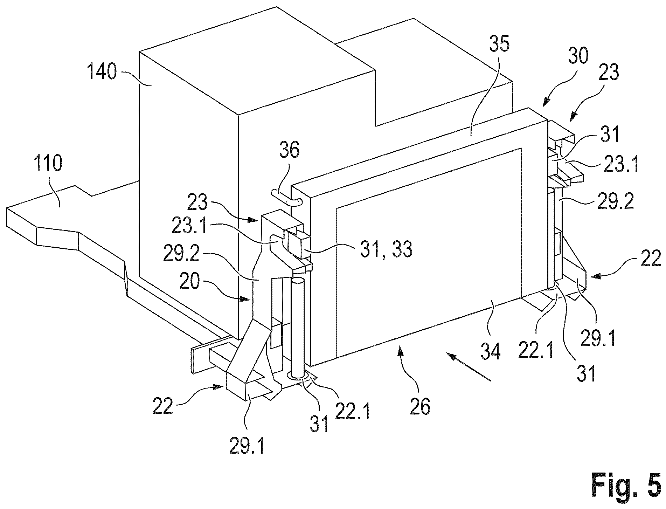

In der Fig. 5 ist das Modul, aufweisend den Fahrwerksrahmen 110, das Aggregat 140 und das Kühlermodul 30, im zusammengebauten Zustand gezeigt, wie es nach dem
zweiten Verfahrensschritt aussieht. Das Kühlermodul 30 ist dabei an den Modulträgern 20 montiert und mittels der Modulträger 20 mit dem Fahrwerksrahmen 110 verbunden. Das Fügen des Kühlermoduls 30 in die Modulträger 20 erfolgt vorzugsweise derart, dass zuerst das Kühlermodul 30 in die Aufnahmen 22.1 der Befestigungsabschnitte 22 eingesetzt wird. Somit ist das Kühlermodul 30 mit dem Modulträger 20 in haltendem Eingriff, und das Gewicht des Kühlermoduls 30 kann zumindest teilweise durch die Modulträger 20 aufgenommen werden. An den Aufnahmen 22.1 sind jeweils Entkopplungselemente 31 angeordnet, sodass ungewünschte Schwingungen bzw. Vibrationen von dem Kühlermodul 30 abgefangen werden können. Nachdem das Kühlermodul 30 in den Aufnahmen 22.1 des Befestigungsabschnitts 22 angeordnet ist, wird das Kühlermodul 30 an den Befestigungsabschnitten 23 in die Aufnahmen 23.1 eingeführt. Dafür ist ein Einlaufmaul 28 vorgesehen, was das Einführen in die Aufnahmen 23.1 vereinfacht. Des Weiteren sind an dem Kühlermodul 30 oder an dem Modulträger 20, an den Aufnahmen 23.1, Entkopplungselemente 31 vorgesehen. Besonders bevorzugt sind die Entkopplungselemente 31 mittels Fixiermitteln 33, insbesondere in Form einer Rast- und/oder Clips-Verbindung, mit dem Modulträger 20 verbunden. Durch das Einrasten bzw. Clipsen ist das Kühlermodul 30 an den Modulträgern 20 fixiert.

Die Anordnung der Befestigungsabschnitte 22 und 23 ist erfindungsgemäß so gewählt, dass die Abschnitte 22 und 23 an den unterschiedlichen Armen 29.1 und 29.2 des Modulträgers 20 angeordnet sind. Insbesondere ist durch die Anordnung der Befestigungsabschnitte 22 und 23 ermöglicht, dass das Kühlermodul 30 durch eine Schwenkbewegung in die Aufnahme 23.1 eingeclipst oder eingerastet werden kann.

Das Kühlermodul 30 kann dabei zumindest einen Kühlkörper 34, einen Lüfter 35 und Funktions-Schnittstellen 36 umfassen. Es ist gut erkennbar, dass durch die erfindungsgemäße Ausgestaltung und Verfahrensschritte der Zugang zu den Schnittstellen 36 einfach möglich ist. Dies wird insbesondere dadurch erreicht, dass das Kühlermodul 30 nicht in das Frontend-Modul integriert ist, sondern unabhängig davon an den Fahrwerksrahmen 110 angebunden wird.

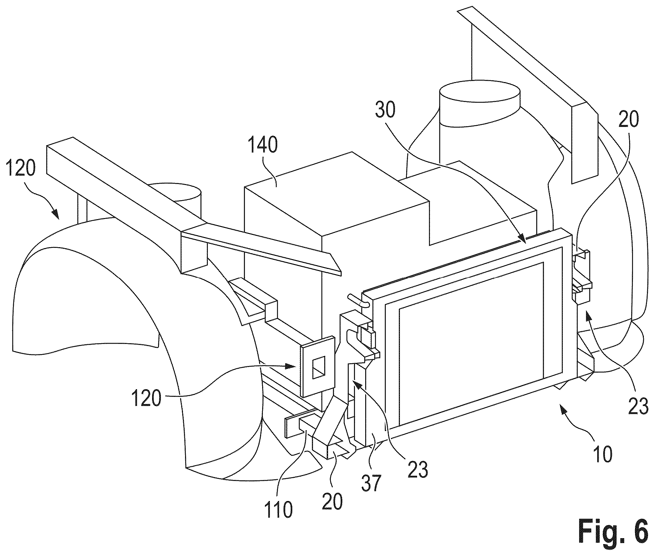

Die Fig. 6 zeigt einen fortgeschrittenen Zustand des Zusammenbaus, wobei zusätzlich eine Karosserie 120 eines Kraftfahrzeugs und eine Dichtungsgeometrie 37 an dem Kühlermodul 30 vorhanden sind. Die Modulträger 20 entsprechen hierbei den Modulträgern gemäß den Fig. 1, 4 und 5. Dargestellt ist insbesondere, wie das Modul aus Fahrwerksrahmen 110, Aggregat 140, Modulträgern 20 und Kühlermodul 30 mit der Karosserie 120 verbunden wird. Bevorzugt wird das Modul von unten in die Karosserie 120 befördert und dann an den Modulträgern 20 mit dieser verbunden, insbesondere verschraubt. Hierfür weisen die Modulträger die zweiten Befestigungsabschnitte 23 auf. Im Bereich der Befestigungsabschnitte 23 wird die Befestigungsanordnung 10 mit der Karosserie 120 vorzugsweise verschraubt. Dadurch wird das das Modul aus Fahrwerksrahmen 110, Aggregat 140, Modulträgern 20 und Kühlermodul 30 zusätzlich mit der Karosserie 120 verschraubt.

Auch in diesem Stadium des Zusammenbaus ist noch gut erkennbar, dass durch die erfindungsgemäße Ausgestaltung und Verfahrensschritte der Zugang zu den Schnittstellen 36 einfach möglich ist. Dies wird insbesondere dadurch erreicht, dass das Kühlermodul 30 nicht in das Frontend-Modul integriert ist, sondern unabhängig davon an den Fahrwerksrahmen 110 angebunden wird.

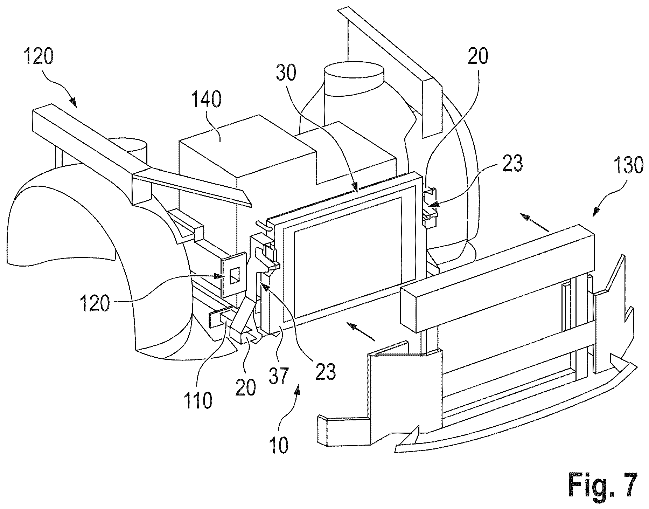

In der Fig. 7 ist zusätzlich zu dem in Fig. 6 gezeigten Zustand noch ein Frontend-Modul 130 gezeigt. Es ist bereits beschrieben worden, dass die erfindungsgemäße Befestigungsanordnung 10 die Montage vereinfacht und beschleunigt. Dieser Vorteil wird insbesondere dadurch erzielt, dass die Modulbildung angepasst wird. Das Kühlermodul 30 wird nicht zuerst mit einem Frontend-Modul 130 verbunden, sondern das Frontend-Modul 130 wird wie in Fig. 7 gezeigt, erst nachträglich montiert. Somit sind auch die Funktions-Schnittstellen des Kühlermoduls bis zu diesem Zeitpunkt frei zugänglich, was die Anbindung vereinfacht und beschleunigt. Das Frontend-Modul 130 wird, wie die Pfeile zeigen, an das in Fig. 6 gezeigte Modul (Karosserie, Fahrwerksrahmen, Kühlermodul) angesetzt und dann mit diesem verbunden, insbesondere verschraubt. Die Dichtungsgeometrie 37 dichtet dabei die Schnittstelle von Frontend-Modul 130 und Kühlermodul 30 ab.

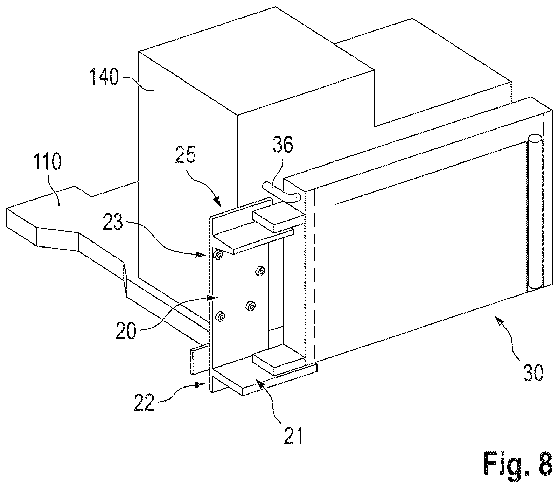

Die Fig. 8 zeigt einen Modulträger 20 gemäß dem Ausführungsbeispiel aus Fig. 2. Gezeigt ist nur ein einziger Modulträger 20. Im Rahmen der Erfindung ist es jedoch denkbar und bevorzugt, dass zwei Modulträger 20 (analog zu dem ersten Ausführungsbeispiel) vorgesehen sind. Der Modulträger 20 weist auch hierbei zwei Kühlermodulaufnahmen 21, 25 auf. Der Modulträger 20 umfasst vergleichbar zu dem Ausführungsbeispiel aus Fig.1 jeweils
zwei Kühlermodulaufnahmen 21, 25. In der gezeigten Perspektive befindet sich auch hier eine Kühlermodulaufnahme 25 im oberen Bereich des Modulträgers 20 und eine Kühlermodulaufnahme 21 im unteren Bereich des Modulträgers 20. Anders als im ersten Ausführungsbeispiel sind die Kühlermodulaufnahmen 21 und 25 in der Fig. 2 beide im Wesentlichen gleich bzw. identisch ausgebildet. Dabei weisen die Kühlermodulaufnahmen 21, 25 jeweils einen Lagerdorn auf, an dem das Kühlermodul 30 angeordnet ist. Darüber hinaus umfassen die Kühlermodulaufnahmen 21, 25 jeweils einen plattformähnlichen Abschnitt zur Anordnung des Kühlermoduls 30. Auf den plattformähnlichen Abschnitten sind die Lagerdorne angeordnet, wobei sich die Abschnitte 21, 25 orthogonal von den Befestigungsabschnitten 22 und 23 erstrecken. Auch hier ist erkennbar, dass die Montage des Kühlermoduls 30 unkompliziert möglich ist. Das Kühlermodul 30 wird auf die Kühlermodulaufnahmen 21, 25 aufgesetzt und dann verbunden. Die Funktions-Schnittstellen 36 sind in frei zugänglich und können einfach mit dem Aggregat 140 und/oder der Elektrik verbunden werden.

In der Fig. 9 ist der zusammengebaute Zustand gezeigt, bei dem die Karosserie 120, der Fahrwerksrahmen 110, das Kühlermodul 30 und das Frontend-Modul 130 miteinander verbunden sind. Das Kühlermodul 30 umfasst zumindest einen Kühlkörper 34, einen Lüfter 35 und Funktions-Schnittstellen 36. Der Modulträger 20 ist dabei zwischen den Schottplatten 150, zum einen von dem Frontend-Modul 130 und zum anderen vor der Karosserie 120, angeordnet und mittels der Befestigungsmittel 24 an dem Befestigungsabschnitt 23 zusammen verschraubt. Es ist weiterhin erkennbar, wie das Frontend-Modul 130 im Befestigungsabschnitt 22 zusätzlich mit dem Modulträger 20 und dem Fahrwerksrahmen 110 verbunden ist.

Fig. 10 zeigt ein Kraftfahrzeug mit einem Fahrwerksrahmen 110 inklusive Antriebsaggregat 140 und einer Karosserie 120 sowie mit einer Befestigungsanordnung 10 zur Anbindung eines Kühlermoduls 30 an den Fahrwerksrahmen 110 des Kraftfahrzeugs. Die Befestigungsanordnung 10 ermöglicht zusätzlich eine einfache Anbindung eines Frontend-Moduls 130 an den Fahrwerksrahmen 110 und an die Karosserie 120.

### Bezugszeichenliste

- 10: Befestigungsanordnung
- 20: Modulträger
- 21: Kühlermodulaufnahmen
- 22: Befestigungsabschnitt
- 22.1: Aufnahme
- 23: Befestigungsabschnitt
- 23.1: Aufnahme
- 24: Befestigungsmittel
- 25: Kühlermodulaufnahme
- 26: Traverse
- 27: Schnittstelle
- 28: Einlaufmaul
- 29.1: Arm
- 29.2: Arm
- 30: Kühlermoduls
- 31: Entkopplungselement
- 32: Entkopplungselementaufnahme
- 33: Fixiermittel
- 34: Kühlkörper
- 35: Lüfter
- 36: Funktions-Schnittstellen
- 37: Dichtungsgeometrie
- 100: Kraftfahrzeug
- 110: Fahrwerksrahmen
- 120: Karosserie
- 130: Frontend-Modul
- 140: Antriebsaggregat
- 150: Schottplatte

## Patentansprüche

1. Befestigungsanordnung (10) zur Anbindung eines Kühlermoduls (30) an einen Fahrwerksrahmen (110) eines Kraftfahrzeugs (100), aufweisend zwei Modulträger (20), jeweils mit zumindest einer Kühlermodulaufnahme (21, 25) zur Lagerung des Kühlermoduls (30) an den Modulträgern (20), mit einem ersten Befestigungsabschnitt (22) zur Befestigung der Modulträger (20) an dem Fahrwerksrahmen (110) und mit einem zweiten Befestigungsabschnitt (23) zur Befestigung der Modulträger (20) an einer Karosserie (120) des Kraftfahrzeugs (100).

2. Befestigungsanordnung (10) nach Anspruch 1,
**dadurch gekennzeichnet,**
**dass** zumindest der erste Befestigungsabschnitt (22) und/oder der zweite Befestigungsabschnitt (23) zumindest eine Aufnahme (22.1, 23.1) für ein Befestigungsmittel (24) aufweist.

3. Befestigungsanordnung (10) nach Anspruch 1 oder 2,
**dadurch gekennzeichnet,**
**dass** die Modulträger (20) zumindest eine zweite Kühlermodulaufnahme (25) aufweisen.

4. Befestigungsanordnung (10) nach Anspruch 3,
**dadurch gekennzeichnet,**
**dass** zumindest eine der Kühlermodulaufnahmen (21, 25) ein Entkopplungselement (31) oder eine Entkopplungselementaufnahme (32) aufweist.

5. Befestigungsanordnung (10) nach einem der vorhergehenden Ansprüche,
**dadurch gekennzeichnet,**
**dass** der erste Befestigungsabschnitt (22) einen ersten Arm (29.1) und der zweite Befestigungsabschnitt (23) einen zweiten Arm (29.2) bildet und der erste Arm (29.1) orthogonal zu dem zweiten Arm (29.2) angeordnet ist, sodass eine im Wesentlichen T-förmige Geometrie gebildet ist.

6. Befestigungsanordnung (10) nach einem der vorhergehenden Ansprüche,
**dadurch gekennzeichnet,**
**dass** zumindest eine der Kühlermodulaufnahmen (21, 25) als Lagerdorn oder als Bohrung ausgebildet ist.

7. Befestigungsanordnung (10) nach einem der vorhergehenden Ansprüche,
**dadurch gekennzeichnet,**
**dass** zumindest eine der Kühlermodulaufnahmen (21, 25) ein Einlaufmaul (28) aufweist, wobei ein Fixiermittel (33) des Kühlermoduls (30) in dem Einlaufmaul (28) befestigbar ist.

8. Befestigungsanordnung (10) nach einem der vorhergehenden Ansprüche,
**dadurch gekennzeichnet,**
**dass** die Modulträger (20) mittels einer Traverse (26) miteinander verbunden sind.

9. Befestigungsanordnung (10) nach Anspruch 8,
**dadurch gekennzeichnet,**
**dass** die Traverse (26) einen Lagerabschnitt für das Kühlermodul (30) aufweist, wodurch das Kühlermodul (30) an der Traverse (26) lagerbar ist.

10. Befestigungsanordnung (10) nach einem der vorhergehenden Ansprüche,
**dadurch gekennzeichnet,**
**dass** die Modulträger (20) eine Schnittstelle (27) zur Befestigung eines Frontend-Moduls (130) des Kraftfahrzeugs (100) aufweisen.

11. Kraftfahrzeug (100) mit einem Fahrwerksrahmen (110) und einer Karosserie (120) sowie mit einer Befestigungsanordnung (10) zur Anbindung eines Kühlermoduls (30) an den Fahrwerksrahmen (110) des Kraftfahrzeugs (100) gemäß einem der vorhergehenden Ansprüche.

12. Verfahren zur Anbindung eines Kühlermoduls (30) an einen Fahrwerksrahmen (110) eines Kraftfahrzeugs (100) aufweisend die Schritte:
- Befestigen der Modulträger (20) an dem Fahrwerksrahmen (110) mittels eines ersten Befestigungsabschnittes (22) der Modulträger (20),
- Fügen des Kühlermoduls (30) in die Modulträger (20),
- Verbinden von Funktions-Schnittstellen des Kühlermoduls (30) mit dem Kraftfahrzeug (100),
- Verbinden des Fahrwerksrahmens (110) mit einer Karosserie (120) des Kraftfahrzeugs (100) und
- Befestigen der Modulträger (20) an der Karosserie (120) des Kraftfahrzeugs (100) mittels eines zweiten Befestigungsabschnittes (23).

13. Verfahren nach Anspruch 12, wobei das Fügen des Kühlermoduls (30) ein Einstecken des Kühlermoduls in eine erste Kühlermodulaufnahme und ein Einführen und/oder Einclipsen des Kühlermoduls (30) in eine zweite Kühlermodulaufnahme (21, 25) umfasst.

14. Verfahren nach Anspruch 12 oder 13, **gekennzeichnet durch** den weiteren Schritt:
- Montage einer Dichtungsgeometrie (37) am Kühlermodul (30).

15. Verfahren nach einem der Ansprüche 12 bis 14, **gekennzeichnet durch** den weiteren Schritt:
- Fügen eines Frontend-Moduls (130) des Kraftfahrzeugs (100) an der Dichtungsgeometrie (37) des Kühlermoduls (30).
